# EUROPEAN PATENT SPECIFICATION

(11) **EP 2 138 043 B1**
(45) Date of publication and mention of the grant of the patent: **29.04.2015**
(21) Application number: 09162157.3
(22) Date of filing: 08.06.2009
(51) Int. Cl.: A01N 59/00, A01N 59/12, A01N 25/08, A01N 25/32, C02F 1/76, A01P 1/00

(54) **Composition and process for the purification of contaminated water**
Zusammensetzung und Verfahren zur Reinigung von verunreinigtem Wasser
Composition et procédé pour la purification d'eau contaminée

(30) Priority: 19.06.2008 IN MU12872008; 07.08.2008 EP 08161998
(43) Date of publication of application: 30.12.2009
(73) Proprietor: Unilever N.V., 3013 AL Rotterdam (NL); Unilever PLC, London EC4Y 0DY (GB)
(72) Inventor: Mahapatra, Samiran, 560 066 Bangalore (IN); Samadder, Satyajit, 560 066 Bangalore (IN); Soman Nair, Prasanth, C, 560 066 Bangalore (IN)
(74) Representative: van den Brom, Coenraad Richard

(56) References cited:
- EP-A- 1 953 119
- WO-A-02/00557
- WO-A-90/05529
- WO-A-2005/068378
- FR-A1- 2 692 881
- DATABASE WPI Week 198039 Thomson Scientific, London, GB; AN 1980-68804C XP002508178 & JP 55 106590 A (MITSUI TOATSU CHEM INC) 15 August 1980 (1980-08-15)

## Description

### FIELD OF THE INVENTION

The invention relates to a composition and a process for disinfection, and particularly for disinfection and purification of contaminated water. The invention is especially useful for removal of suspended impurities and harmful microbial contaminants like bacteria, viruses and cysts from water to make it healthy and palatable for human consumption.

### BACKGROUND AND PRIOR ART

There are many operations where disinfection is desired. Disinfection means inactivation of germs which may be harmful to humans. Disinfection operations include purification of water for many purposes e.g. human ingestion, cleaning operations at home, industrial operations in manufacturing units, biotechnology and biomedical processes and also in maintaining hygiene in public places like hospitals, nursing homes, and for cleaning of instruments used in surgery. In all of these operations, certain disinfectants or biocides are used. After such use, once the biocidal/disinfection action is complete, it is desirable to remove all traces of residual disinfectant/ biocides to ensure minimal side-effect on the people using the material/substrates disinfected. Thus all disinfection processes are two step to make the processes consumer friendly, first involving disinfection and the second involving removal of the residual disinfectants.

Purification of water for potable purposes is one of the most important disinfection processes. There are billions of people, who have to depend on unpurified water for potable purposes. These people usually reside in the underdeveloped and developing countries, especially in the rural areas. Municipal water treatment systems which pipe purified water to households are generally not available in these areas. People in such areas have to collect the water from sources like rivers, wells, lakes, streams and bore-wells in pots and store them in their homes for both cooking and drinking. Such water is often infected with harmful micro-organisms like cysts, viruses and bacteria. The mortality and morbidity rate especially in infants and small children is high in these areas due to the consumption of such contaminated water.

During the course of about last half century, the situation in such areas has improved due to better education and economic status of the people. People are generally becoming aware that boiling of water makes it microbiologically safe; but boiling of water is expensive, cumbersome and requires availability of fuel like coal, kerosene or wood which are increasingly becoming scarce and expensive. Advanced home purification systems like UV (ultra-violet), RO (reverse-osmosis) etc require continuous flow of water and availability of electricity. Both of these are often not available on a continuous basis in these areas. Thus, there has always been a need to provide a simple, easy-to-use, inexpensive and safe method to meet the drinking water requirement for these people.

Heath Departments in many countries provide halogen based disinfectants for inactivation of the micro-organisms in water. Such disinfectants include iodine, iodinated resins, chlorine compounds like calcium hypochlorite, sodium dichloro isocyanuric acid (NaDCCA), trichloroisocyanuric acid (TCCA) etc. These disinfectants are very effective in inactivating micro-organisms but the residual halogen in the water often leaves an unpleasant taste or odour making the water unpalatable. Sometimes, the residual disinfectant may be harmful. A disinfectant-quencher has been suggested to solve this problem.

EP0554598 (Levy, 1993) describes a process, an apparatus, a filtering device and other specific products where the water that is used to make beverages such as coffee, tea or soft drinks is treated with minute quantities of thiosulphate in anhydrous form to neutralise chlorine or cloramines present in the water. Such neutralisation or destruction is claimed to take place almost instantaneously.

WO02/00557 (P&G) describes a water purification composition comprising essentially a primary coagulant, a bridging flocculent, a coagulant aid and optionally a disinfectant. This patent application also claims a method for clarifying and purifying water, which comprises several stages selected from coagulation and flocculation, disinfection, filtration, neutralisation and nutrifying. This publication describes use of a biocide which is provided in delayed release mode with respect to the coagulant and flocculant. A method is also described which includes a neutralisation stage in which the drinking water is brought into contact with a disinfectant neutralisation agent subsequent to the separation stage to reduce or remove excess disinfectant prior to use. In the case of chlorine based disinfectants, suitable neutralisation agents listed are activated carbon and reducing agents such as sodium thiosulphate, sodium sulphite, hydrogen peroxide and sodium percarbonate.

Thus it is known that one could use compounds that react with the biocide to render the water free of the biocide. To ensure that sufficient biocidal action takes place and only thereafter the excess biocide is quenched, there are technical problems to be overcome. The biocidical action takes a finite amount of time which depends on the concentration of the biocide and to a small extent on the concentration of the microorganisms. Hence if the biocide quencher is released too fast into the water, adequate biocidal action does not take place. On the other hand, biocide quenching should happen fast enough so that the consumers do not have to wait inordinately long before they can consume the water. Hence it is desirable that the biocide is quenched in a reasonable amount of time, of about 2 to 30 minutes, more preferably in 2 to 15 minutes, further more preferably in 2 to 10 minutes.

EP1953119 (Unilever) describes solid water purification composition in the form of a two-component system, with a first component comprising a biocide and a water-insoluble adsorbent, and a second component comprising a coagulating agent and a flocculating agent. A biocide quencher may be included in the composition. However, there is no disclosure of a specific form of the biocide quencher for a single step process.

WO 90/05529 (University of Brandeis) describes a one-step process for disinfection and sterilization of surfaces and solutions using a composition comprising a hypochlorite salt, a thiosulphate salt, and a prebuffer and the initial pH of the solution is adjusted to 9.0 or above. This describes how by increasing the pH of the mixture the reactivity of thiosulphate with hypochlorite could be reduced and permits disinfection process. The prebuffers used are selected from alkali metal phosphates, borates and carbonates and these will be present in the purified water also and the presence of these is not suitable in drinking water. There is no disclosure of a specific form of the biocide quencher for efficacious quenching.

JP55106590 ((Mitsui Toatsu Chem Inc) describes occlusion compounds for removing free chlorine from water, which comprise a chlorine removing agent such as sodium thiosulphate occluded on a porous material. However, there is no disclosure of specific porous materials for efficacious quenching.

It is possible to provide the biocide and the biocide quencher in separate packaging with the instruction to the consumer to dose the biocide quencher into the water, a pre-determined amount of time after the biocide is added to the water as is suggested in WO02/00557. FR2692881 also discloses solid compositions for decontaminating water consisting of two powders which have to be added seguentiallv to the water to bepurified. The compositions in said document comprise an oxidising biocide, a reducing agent and a water insoluble salt.

Dosing the biocide quencher into the water after the biocide is added to the water, involves manual intervention which is cumbersome and not liked by the consumer. Moreover, if consumer does not follow the instruction properly and adds the quencher soon after or before the biocide, the aim of the biocidal action will not be accomplished. It is desirable from the viewpoint of convenience to the consumer to add both the biocide and the biocide quencher simultaneously into the water to be purified microbiologically.

The present inventors have been working to solve this problem of providing a composition that can be added to the water in a single stage which ensures that the water is purified to the desired levels and that the residual biocide is quenched before the water is consumed by the user. Further, the inventors were keen to develop a composition that is easy and inexpensive to manufacture and can be produced using widely available raw materials without the use of chemicals like phosphates and borates which are considered contaminants. The pH of the system is also within the drinking water window. After trying a very large number of possible approaches, one of the approaches that has given the desired control on rate of disinfection and the desired control on the rate of biocide quenching is a composition comprising an oxidising biocide and a biocide quencher which is a solid matrix of a reducing agent in selective substantially water insoluble metallic compounds.

Thus, it is one object of the invention to provide for a composition for purifying water contaminated with harmful micro-organisms while ensuring that the water is safe and palatable to consume.

It is another object of the present invention to provide for a composition for purifying water contaminated with harmful microorganisms which provides for at least 6 log removal of bacteria, 4 log removal of virus and 3 log removal of cysts.

It is yet another object of the present invention to provide for a composition for purifying water using a biocide which on the one hand is effective in inactivation of microorganisms while on the other hand the biocide is quenched before the water is consumed.

It is yet another object of the present invention to provide for a composition for purifying water using a biocide which in addition to the desired inactivation of harmful microorganisms and quenching of the biocide before the water is consumed, can be prepared by the simple process using widely available and inexpensive materials.

It is yet another object of the invention to provide for a method to purify water to make it microbiologically safe as well as palatable to consume.

Although the present invention has been developed with objects of purifying water, the present inventors realised that the composition and process are equally suitable for many other disinfection purposes.

### SUMMARY OF THE INVENTION

Thus, according to the first aspect of the present invention there is provided a solid disinfection composition comprising
(i) an oxidising biocide and
(ii) a biocide quencher which is a solid matrix comprising a reducing agent entrapped in a substantially water insoluble material selected from oxide, hydroxide, oxo-hydroxide or carbonate of a metal, and wherein the reducing agents are selected from the group consisting of C₃-C₁₂ organic acids and salts thereof, and one or more inorganic salts selected from sulphides, bisulphites, metabisulphites and thiosulphates.

The oxidising biocide is preferably 5-50 weight% of the solid disinfection composition.

The reducing agent is preferably 5-50 weight% of the solid disinfection composition.

The substantially water insoluble material is preferably 15-90 weight% of the solid disinfection composition.

The composition is especially useful for purification of water.

### DETAILED DESCRIPTION OF THE INVENTION

All parts herein are by weight unless otherwise specified.

The invention provides for a composition for disinfection especially for purification of water using an oxidising biocide. The oxidising biocide, after inactivating the microorganisms, are quenched or made ineffective using a biocide quencher.

The biocide quencher as per the present invention provides slow and controlled release of a reducing agent. The biocide quencher is in the form of a solid matrix which comprises a reducing agent entrapped in a substantially water insoluble material selected from oxide, hydroxide, oxo-hydroxide or carbonate of a metal. By the term reducing agent is meant a compound having an redox potential less than 1.4 V, preferably less than 1.0 V, further more preferably less than 0.5 V with respect to Standard Hydrogen Electrode (ref: Electrochemical series, CRC Handbook of Chemistry and Physics, 80th Edition, pp. 8-21 to 8-31). The reducing agents are selected from the group consisting of C2-12 organic acids and salts thereof, and one or more inorganic salts selected from sulphites, bisulphites, metabisulphites and thiosulphates. Preferably the inorganic salts are of alkali metal, alkaline earth metal, or ammonium. Preferred organic acid salts are citrates, malates and ascorbates. More suitable reducing agents for use in the composition of the invention are alkali metal ascorbate or thiosulphate. The reducing agent is preferably present in 5-50%, more preferably in 7-35%, further more preferably 10-30% by weight of the solid disinfection composition. In its optimum operation, the oxidising biocide and anion of the reducing agent are present in a 1:1 equivalent ratio assuming that all of the anion present in the solid matrix is released into the aqueous medium for quenching the residual biocide. However, a larger equivalent amount of biocide quencher may be required to be present since the thermodynamics and kinetic of the release of the anions present in the solid matrix may be less than 100% of that theoretically possible. In the present invention, the weight ratio of the biocide to the biocide quencher, is preferably in the range of 1:1 to 1:20, more preferably in the range of 1:2 to 1:10.

The solid matrix comprises a substantially water insoluble material selected from metal oxide, hydroxide, oxohydroxide and carbonate. Oxides, hydroxides, oxohydroxides and carbonates of calcium, zinc, magnesium or aluminium are preferred. Of these, the more preferred compounds are zinc oxide, zinc hydroxide, magnesium oxide, magnesium hydroxide, alumina, aluminium hydroxide or calcium carbonate. By the term substantially insoluble is meant that the material has a solubility in water of less than 1 grams per liter (gpl), preferably less than 0.1 gpl, more preferably less than 0.01 gpl at 25°C. The substantially water insoluble material is preferably present in 15 to 90%, more preferably 20 to 80%, further more preferably 25 to 70% by weight of the solid disinfection composition. The weight ratio of the reducing agent to the substantially water insoluble water is preferably in the range of 1:0.5 to 1:20, more preferably in the range of 1:0.75 to 1:10. The biocide quencher preferably has a particle size in the range of 100 to 2000 micron, more preferably in the range of 300 to 800 micron. The inventors worked on a large number of substantially water insoluble materials to form the solid matrix but found that the desired control in the rate of release of the reducing agent into the water could be achieved only through use of selective materials viz. oxides, hydroxides, oxo-hydroxides or carbonates of metals. Many other substantially water insoluble materials which are porous and which are widely believed to be good materials for entrapping actives, like clays, zeolites etc were used but were found ineffective in providing the desired results.

The biocide quencher is preferably encapsulated in a water soluble polymer. Suitable water soluble polymers include polyethylene oxide, hydroxyl ethyl cellulose, guar gum or modified starch.

The oxidising biocide is a material capable of inactivating or preferably killing microorganisms. By the term oxidising is meant a material that has a redox potential of greater than 0.5 V, preferably greater than 0.8 V, further more preferably greater than 1.0 V with respect to Standard Hydrogen Electrode. Preferred oxidising biocides are halogen compounds. Preferred halogens are chlorine or iodine, more preferably chlorine. Suitable chlorine compounds are inorganic compounds like calcium hypochlorites, or chloramines, or organic chlorine compounds like sodium dichloro-isocyanurates, or trichloroisocyanuric acid. Alternately, the oxidising biocide may be iodine, or a tri iodide or pentaiodide resin. Most preferred oxidising biocide is calcium hypochlorite. The oxidising biocide has a redox potential which is at least 200 mV higher than the redox potential of the reducing agent used in the composition of the invention.

Calcium hypochlorite is a commonly used solid inorganic chlorine disinfectant. It is generally available in two forms. The more common form has the formula Ca(OCl)Cl and is commonly referred to as stabilised bleaching powder (SBP). Commercially available bleaching powder generally has available chlorine in amounts in the range of 30 to 35 wt%. The other form of calcium hypochlorite is called high-strength hypochlorite and has the chemical formula Ca(OCl)₂. This can be commercially procured at available chlorine in the range of 60 to 65 wt%. Of the two forms of calcium hypochlorite, the high strength hypochlorite is preferred. The biocide is preferably present in 5 to 50%, more preferably 15 to 47%, further more preferably 20 to 45% by weight of the solid disinfection composition.

According to a preferred aspect of the invention the biocide quencher used in the composition of the invention is prepared by a process comprising the steps of (i) mixing the reducing agent with the substantially water insoluble material in the presence of water to form a paste and (ii) drying the paste. It is preferred that water is used in minimal amounts. Use of minimal amount of water ensures that the cost of drying the paste formed is low. However sufficient amount of water needs to be used to ensure dissolution of the reducing agent to ensure nearly molecular level of dispersion of the reducing agent in the solid matrix. The weight ratio of the reducing agent to water is preferably in the range of 1:0.5 to 1:5. When the reducing agent is sensitive to oxidation in air e.g. when the reducing agent is sodium ascorbate, the step of mixing is preferably carried out in an inert atmosphere. The inert atmosphere may be obtained by blanketing the headspace of the mixing vessel with an inert gas e.g nitrogen.

According to another aspect of the present invention there is provided a water purification composition comprising a coagulating agent which is a water soluble inorganic metal salt having trivalent cation, a flocculating agent which is a high molecular weight water soluble polymer and the solid disinfection composition of the first aspect of the invention.

The coagulating agent is a compound which is a water-soluble inorganic metal salt having trivalent cation. Suitable trivalent cations are Al³⁺ and Fe³⁺. The coagulant is generally free from carbon atoms. Examples of coagulating agents are ferric sulphate, aluminium sulphate and polyaluminium chloride. The coagulating agent is preferably present in an amount in the range of from 5 to 60%, more preferably from 15 to 55% by weight of the water purification composition.

The flocculating agent is a compound which is a high molecular weight water soluble polymer. Examples of suitable flocculating agents are polysaccharides (dextane celluloses), proteins, modified celluloses (hydroxylethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. A preferred amount of the flocculating agent is from 0.5 to 15%, more preferably from 1 to 10% and most preferably from 2 to 8% by weight of the composition.

The purification action of the compositions of the invention may be attained at the pH of the raw water available. As a preferred aspect, the pH of the composition may be adjusted to the desired range of 6 to 8 by including a buffering agent in the composition. Suitable buffering agents are calcium oxide, sodium carbonate or sodium bicarbonate. The buffering agent when present is included in an amount in the range of 0.5 to 50% by weight of the composition.

The composition of the invention may optionally comprise an adsorbent. The adsorbent is preferably a material which is capable of adsorbing high levels of organic or inorganic compounds. Suitable adsorbents are clays. Examples of clay include Montmorillonite clay (dioctheydral smectite clay), Laponite, Hectorite, Nontronite, Saponite, Volkonsite, Sauconite, Beidellite, Allevarlite, Illite, Halloysite, Attapulgite, Mordenite, Kaolines, and Bentonite. A highly preferred clay as per this invention is Bentonite clay. When included, adsorbents are present in an amount in the range of 5 to 75%, more preferably from about 10 to 60% by weight of the composition.

The composition of the invention preferably has a moisture content of not more than 5%, more preferably not more than 3%, and most preferably not more than 2% by weight of the composition.

The solid disinfection composition is preferably present in 5-40%, more preferably 8-35% by weight of the water purification composition of the invention.

The water purification composition of the invention is preferably packed in two portions which are spatially separated wherein the first portion comprises the oxidising biocide and the second portion comprises the biocide quencher. This is to ensure that these two components do not react with each other during storage, transportation and up until the time of use by the consumer. The two portions may be packed in a two compartment sachet for the sake of convenience to the consumer. When the flocculating agent is present in the composition of the invention, it is preferred that it is present in the second portion. When an adsorbent is present, it may be included in both the first portion and the second portion or may be present in any one of the portions.

The solid form is the suitable form of the compositions of the invention. Suitable solid forms include powder, granule and tablet forms, most preferred form being the powder form. When delivered as two portions, the most preferred form is the powder form in both the first portion and the second portion.

The composition of the invention is preferably delivered in amounts in the range of 0.5 to 10 grams more preferably in the range of 1 to 5 gram. These are usually added to 5 to 20 litre of water. When delivered in two portions, suitable weight of the first portion is 0.01 to 5 gram, more preferably 0.1 to 1.5 gram and suitable weights of the second portion is 0.5 to 10 gram.

The compositions of the invention may be delivered to the consumer in any known suitable packaging form. When formed as tablets, the packaging may be metallised laminate or blister packing. When formed as powders, suitable packaging is metallised laminate. However the metallised laminate packaging has to be such that the oxidising biocide that usually reacts with metals is kept separated from the metal part of the laminate by use of suitable polymeric layers on the metal layer.

A highly advantageous aspect of the present invention is that the entire composition may be added to the water to be purified in one go i.e the entire composition is added to the water simultaneously.

According to another aspect of the present invention there is provided a method for purifying contaminated water comprising the steps of (i) contacting contaminated water with a composition of the invention and (ii) separating the insoluble matter from the water.

According to a preferred aspect, while purifying contaminated water by the method in accordance with the present invention, the step of contacting the contaminated water with the composition needs to be carried out for short time i.e only for one or two minutes preferably with stirring. The insoluble matter is then usually allowed to settle, a step that takes about 5 to 30 minutes, preferably 5 to 20 minutes after which the insoluble matter is separated from the water, to obtain purified water. When the composition of the invention comprises only the biocide and the biocide quencher, the biocide quencher comprises a substantially water insoluble material, and this tends to settle down.

When the water purification composition is used, the action of microbial inactivation takes place along with the flocculation of the dispersed impurities in the water causing large flocs to form which settle down faster. These large flocs can be easily separated from the water by decantation or by using a simple muslin cloth. The unique advantage of the invention is that biocide quencher is added along with the biocide, thereby making it very convenient for the consumer to use this product.

The present inventors have determined that the compositions of the invention are very effective in inactivating or separating harmful microorganisms like bacteria, virus and cysts. Thus, according to yet another aspect of the present invention there is provided use of the compositions of the invention for purifying contaminated water for at least 6 log bacteria removal, 4 log virus removal and 3 log cyst removal.

The invention will now be illustrated by the following non-limiting examples.

### EXAMPLES

The following experiments were carried out to demonstrate the superiority of the disinfectant composition of the invention as compared to compositions of the prior art.

Examples 1 to 4 Improvement in the rate of biocide quenching with biocide quenchers of the invention as compared to prior art
In the Examples 1 to 3 the test water consisted of taking twelve litre of water to which 0.18 gram of calcium hypochlorite (having 65% available chlorine) was added and stirred to dissolve all of the calcium hypochlorite. In Example 4, 10 mg/litre of iodine was added instead of the calcium hypochlorite.

### Example -1:

The concentration of chlorine in the test water was measured at certain times intervals up to 15 minutes after the addition of the calcium hypochlorite.

### Example -2:

To the test water, 0.22 gram of sodium thiosulphate was added and stirred to dissolve all of it. The concentration of chlorine in the water was measured.

### Example-3:

Sodium thiosulphate was entrapped in a solid matrix of magnesium hydroxide by using the following procedure:

A 10 ml solution of sodium thiosulphate (5 gram) was prepared in water. This solution was then added to Magnesium Hydroxide powder (10 gram) and mixed thoroughly to form a thick paste. The paste was dried at 60-80°C under vacuum to a moisture content of less than 5 wt%. The dried mass was then ground and sieved to desired particle size distribution. The product with a particle size of 300-800 micron was preferred for controlled release of thiosulphate. The ratio of reducing agent and magnesium hydroxide in this product was 1:2.

An FTIR spectrum of the solid matrix thus prepared is shown in Figure -1, which shows a peak at - 1130 cm ⁻¹ that confirms the presence of the thiosulphate anion in it.

To the 12 litre test water, 0.45 gram of the biocide quencher as prepared above was added and stirred. The concentration of available chlorine in the test water was measured at various intervals over 15 minutes.

### Example -4:

To the 12 litre test water, 0.5 gram of the biocide quencher as prepared for Example-3 was added and stirred. The concentration of iodine in the test water was measured at various intervals over 15 minutes.

The procedure for measurement of chlorine and iodine content in water is given below:
Available chlorine or iodine was analyzed by iodometric method in accordance with Standard Methods (APHA, AWWA & WEF 2001, Standard Methods for the Examination of Water and Wastewater. 20th ed., Part 2130. Washington, DC: American Public Health Association/American Water Works Association and Water Environment Federation).

The data on the concentration of the biocide in the test water as a function of time for Examples 1 to 4 is summarised in Table - 1.

**TABLE - 1**

| Time, minute | Concentration of biocide in milligram/litre | | | |
|---|---|---|---|---|
| | Example -1 | Example - 2 | Example-3 | Example - 4 |
| 0 | 10.7 | 10.5 | 10.7 | 6.5 |
| 0.5 | 10.7 | 0 | Not measured | Not measured |
| 1 | 10.7 | | 5.0 | 2.6 |
| 3 | 10.7 | | 3.4 | 0 |
| 5 | 10.7 | | 2.7 | |
| 10 | 10.7 | | 0.1 | |
| 15 | 10.5 | | 0 | |

The data in Table -1 indicates that inclusion of a biocide quencher of the invention (Examples 3 and 4) controls the concentration of biocide in water over desired time.

Example 5 to 8: Different types of biocide quenchers, process for their preparation and their efficacy
In the following experiments different types of biocide quenchers were prepared using different processes and the performance of each was checked to show the efficiency in controlling the concentration of biocide in water. In the Examples 5 to 8, the test water consisted of taking twe (having 65% available chlorine) was added and stirred to dissolve all of the calcium hypochlorite.

### Example - 5:

A biocide quencher in which thiosulphate is entrapped in aluminium hydroxide was prepared using a procedure similar to that used in Example 3 to form a thick paste. The paste was dried at 60-80°C under vacuum to a moisture content of less than 5 wt%. The dried mass was then ground and sieved to desired particle size distribution. The product with a particle size of 300-800 micron was preferred for controlled release of thiosulphate. The mass ratio of reducing agent and aluminium hydroxide in this product was about 1:2.
An FTIR spectra of the solid matrix thus prepared is shown in Figure -2 which shows a peak at - 1130 cm ⁻¹ that confirms the presence of the thiosulphate anion in it.

To the test water, 0.45 gram of the biocide quencher as prepared above was added and stirred. The concentration of chlorine in the test water was measured at various intervals over 15 minutes.

### Example-6:

Thiosulphate was entrapped in a solid matrix of zinc hydroxide by using the following procedure:

Zinc nitrate hexa hydrate (9 gram) was dissolved in 50 ml of water. 1 N sodium hydroxide solution was added drop wise into the above solution which was kept under constant stirring. The addition continued till the pH of solution raised to -8. The slurry was agitated for 2 hour at 25°C and aged for 24 hour. The precipitated zinc hydroxide was then filtered and the wet cake was washed to be substantially free of dissolved salts using de-ionized water. Anhydrous sodium thiosulphate (1.3 gram) was added to the wet cake and mixed thoroughly. The paste was dried at 60-80°C under vacuum to a moisture content of less than 5 wt%. The mass ratio of thiosulphate anion and zinc hydroxide in this example was about 1:2.

An FTIR spectra of the solid matrix thus prepared was obtained and this is shown in Figure-3 which shows a peak at - 1130 cm⁻¹ that confirms the presence of the thiosulphate anion in it.

To the test water, 0.6 gram of the biocide quencher as prepared above was added and stirred. The concentration of chlorine in the test water was measured at various intervals over 15 minute.

### Example-7:

Vitamin C (L-ascorbic acid) entrapped in zinc oxide was prepared by using the following procedure:

A 15 ml solution of ascorbic acid (5 gram) was prepared in water. This solution was then added to zinc oxide (10 gram) powder and mixed thoroughly to form a thick paste. It is preferred if this step is carried out under inert (e.g., nitrogen) atmosphere in order to avoid decomposition of vitamin C. The paste was dried at 60-80°C under vacuum to a moisture content of less than 5 wt%. The mass ratio of Vitamin C and zinc oxide in this example was about 1:3.

To the test water, 0.9 gram of the biocide quencher as prepared above was added and stirred. The concentration of available chlorine in the test water was measured at various intervals over 15 minute.

### Example-8:

Thiosulphate was entrapped in zinc hydroxide to form a solid matrix. This solid matrix was encapsulated in hydroxy ethyl cellulose by using the following procedure:

Thiosulphate entrapped zinc hydroxide (2.0 gram) as prepared in Example 6 was treated with 5 ml of Hydroxy ethyl cellulose solution (0.1 gram). The thick paste was then dried at 60-80°C under vacuum to a moisture content of less than 5 wt%.

To the test water, 0.75 gram of the biocide quencher as prepared above was added and stirred. The concentration of available chlorine in the test water was measured at various intervals over 20 minute.

The data on the concentration of the biocide in the test water as a function of time for Examples 5 to 8 is summarised in Table - 2.

**TABLE - 2**

| | Concentration of biocide in milligram/litre | | | |
|---|---|---|---|---|
| Time in minute | Example -5 | Example - 6 | Example-7 | Example-8 |
| 0 | 10.0 | 10.7 | 12.0 | 10.4 |
| 1 | | | 2.7 | 3.7 |
| 2 | 3.5 | 6.2 | | 1.5 |
| 5 | 2.1 | 3.8 | 2.0 | 0 |
| 8 | | | 0.7 | |
| 10 | | 1.6 | 0 | |
| 12 | 0.2 | 0 | | |
| 15 | 0 | | | |

The data in Table-2 indicates that various types of biocide quenchers can be prepared as per the invention using different methods to achieve the desired controlled concentration of biocide in water.

### Examples 9 and 10:

Efficacy of Water purification compositions comprising Coagulating agent, Flocculating agent, a biocide and a biocide quencher:

### Example-9:

A water purification composition as shown below was prepared and stored in a two - compartment sachet.
Compartment 1: Calcium hypochlorite (65% average chlorine) : 0.18 gram
Compartment 2: Aluminium sulphate: 2.0 gram; nonionic polyacrylamide: 0.2 gram, Bentonite clay: 1.0 gram; Biocide quencher as prepared in Example 3: 0.45 gram.

When desired to be used, the contents of the two compartment were added simultaneously to a test water which contained the following: 10⁴ cysts, 10⁷ bacteria and 10⁵ virus, 150 mg test dust.
The contents were stirred for 2 minutes and left to stay for 15 minutes.
The water contained 10 ppm by weight chlorine immediately after addition of the composition and no chlorine after 15 minutes. The water was microbiologically pure passing the test of 3 log cyst removal, 6 log bacteria removal and 4 log virus removal.

### Example-10:

A water purification composition as shown below was prepared and stored in a two - compartment sachet.
Compartment 1: Calcium hypochlorite (65% average chlorine) : 0.36 gram
Compartment 2: Aluminium sulphate: 2.0 gram; nonionic polyacrylamide: 0.2 gram,
Bentonite clay: 1.0 gram; Biocide quencher as prepared in Example 3: 0.9 gram.

When desired to be used, the contents of the two compartments were added simultaneously to test water which contained the following10⁴ cysts, 10⁷ bacteria and 10⁵ virus, 150 mg test dust.

The contents were stirred for 2 minutes and left to stay for 15 minutes.
The water contained 20 ppm by weight chlorine immediately after addition of the composition and no chlorine after 15 minutes. The water was microbiologically pure passing the test of 3 log cyst removal, 6 log bacteria removal and 4 log virus removal, which is a standard for purity of water as defined by WHO.

### Examples 11 to 13: Preparation of disinfection compositions with other types of substantially water insoluble material

In the following experiments, different types of biocide quenchers were prepared using substantially water insoluble materials outside the invention. The test water consisted of taking twelve litre of water to which calcium hypochlorite (having 65% available chlorine) was added and stirred to dissolve all of the calcium hypochlorite to give chlorine content of about 10 ppm.

A solid matrix in which thiosulphate is entrapped in the substantially water insoluble material was prepared using the procedure similar to that used in Example 5. The mass ratio of reducing agent and the water insoluble material in the product was about 1:2.

To the test water, 0.5 gram of the biocide quencher as prepared above was added and stirred. The concentration of chlorine in the test water was measured at various intervals over 5 minutes. The results for various water insoluble materials outside the invention are summarized in Table -3.

### Example 14: Substantially water insoluble material admixed with the reducing agent

A composition as per Example - 5 was prepared except that the process comprised mixing powder of the aluminium hydroxide with powder of sodium thiosulphate. To the test water, 0.5 gram of the admixture as prepared above was added and stirred. The concentration of chlorine in the test water was measured at various intervals over 5 minutes. The results are summarized in Table -3.

**TABLE - 3**

| Example | Water insoluble material | Concentration of biocide in milligram/litre | | | |
|---|---|---|---|---|---|
| | | Time = 0 minutes | Time = 1 minutes | Time = 3 minutes | Time = 5 minutes |
| 11 | Bentonite clay | 10.5 | 0 | 0 | 0 |
| 12 | Silica gel | 10.5 | 0 | 0 | 0 |
| 13 | Zeolite | 10.5 | 0 | 0 | 0 |
| 14 | Aluminium hydroxide in powder form | 10.5 | 0 | 0 | 0 |

The data in Table - 3 indicates that when the reducing agent is admixed as a powder along with the substantially water insoluble material without being entrapped in a solid matrix (Example-14), the desired control on the rate of biocide quenching is not obtained. Further, when water insoluble materials outside the scope of the invention are used, even when the reducing agent is entrapped in a solid matrix, the desired control on the rate of biocide quenching is not obtained.

The invention thus provides for disinfection compositions and water purification compositions that ensure that excess disinfectant/biocide left over after efficient disinfection is quenched in a controlled manner.

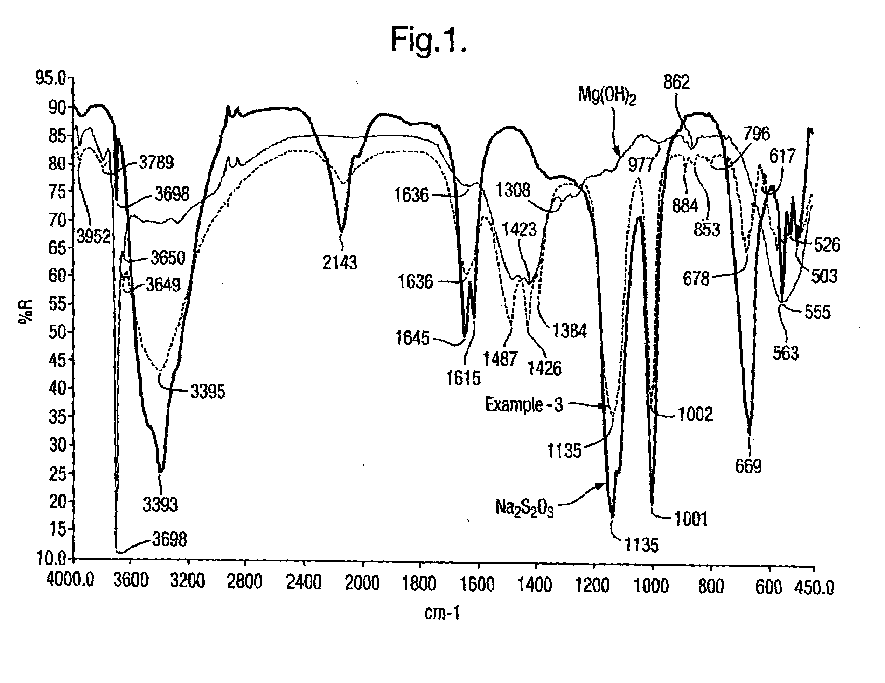

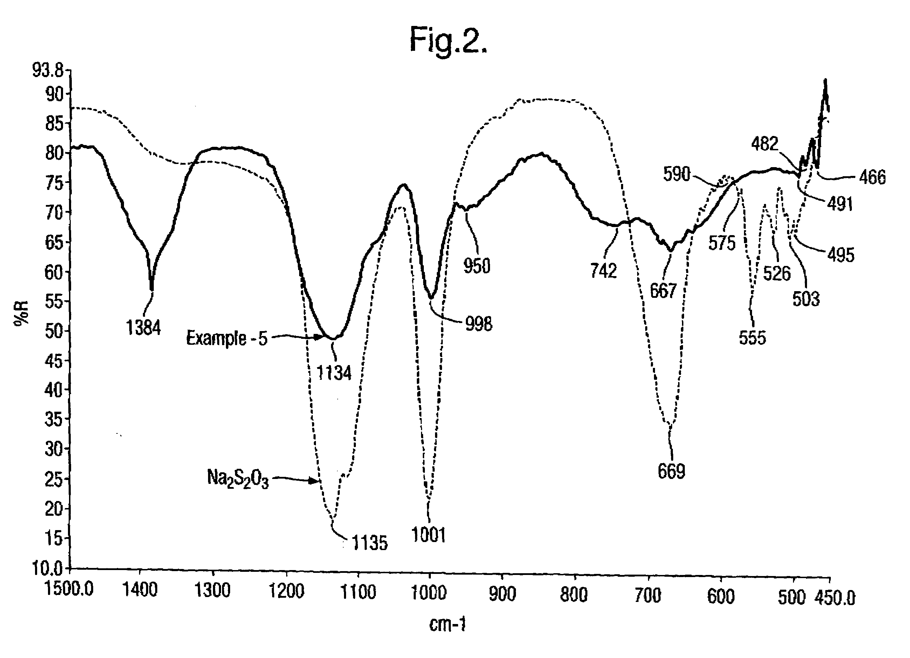

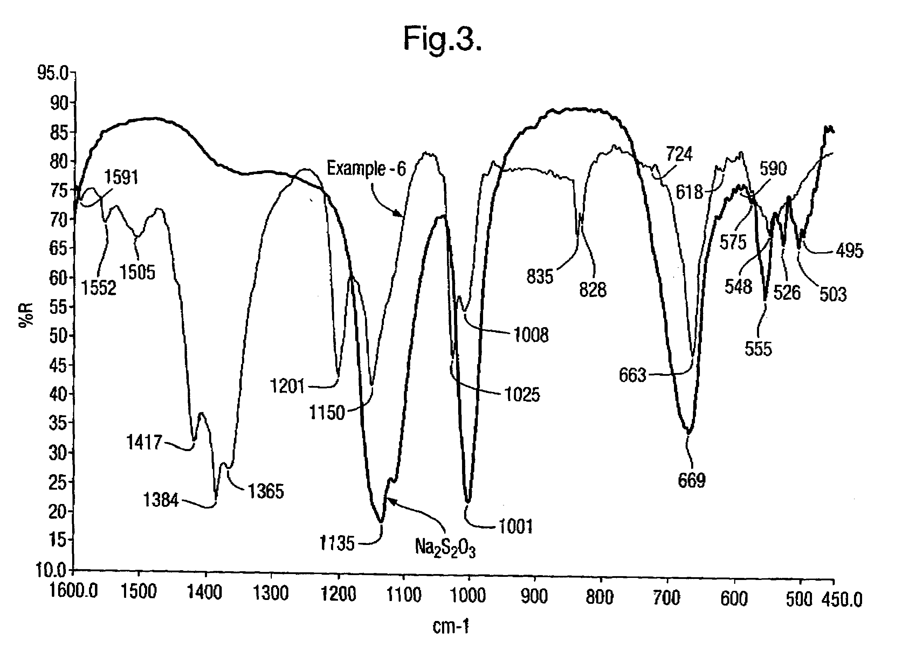

## Claims

1. A solid disinfection composition comprising
(i) an oxidising biocide and
(ii) a biocide quencher which is a solid matrix comprising a reducing agent entrapped in a substantially water insoluble material selected from oxide, hydroxide, oxo-hydroxide or carbonate of a metal, where said substantially water insoluble material has solubility in water of less than 1 gram per liter at 25 °C, and wherein the reducing agent is selected from the group consisting of C₂-C₁₂ organic acids and salts thereof, and one or more inorganic salts selected from sulphides, bisulphites, metabisulphites and thiosulphates.

2. A solid disinfection composition as claimed in claim 1 comprising 5 - 50% oxidising biocide, 5-50% reducing agent and 15-90% substantially water insoluble material by weight of the solid disinfection composition.

3. A solid disinfection composition as claimed in claim 1 wherein said metal is calcium, zinc, magnesium or aluminium.

4. A solid disinfection composition as claimed in any one of the preceding claims wherein the reducing agent is an alkali metal ascorbate or thiosulphate.

5. A solid disinfection composition as claimed in any one of the preceding claims wherein the oxidising biocide is a halogen compound.

6. A solid disinfection composition as claimed in any one of the preceding claims wherein the weight ratio of the reducing agent to the substantially water insoluble material is in the range of 1:0.5 to 1:20.

7. A solid disinfection composition as claimed in any one of the preceding claims wherein the biocide quencher is prepared by a process comprising the steps of (i) mixing the reducing agent with the substantially water insoluble material in the presence of water to form a paste and (ii) drying said paste.

8. A solid disinfection composition as claimed in claim 7 wherein the weight ratio of the reducing agent to water is in the range of 1:0.5 to 1:5.

9. A water purification composition comprising a coagulating agent which is a water soluble inorganic metal salt having trivalent cation, a high molecular weight water soluble polymeric flocculating agent, and a solid disinfection composition as claimed in any one of the preceding claims.

10. A water purification composition as claimed in claim 9 comprising two portions which are spatially separated wherein the first portion comprises the oxidising biocide and the second portion comprises the biocide quencher.

11. A method for purifying contaminated water comprising the steps of (i) contacting contaminated water with a composition as claimed in any one of the preceding claims and (ii) separating the insoluble matter from the water.

12. Use of a composition as claimed in any one of the preceding claims 1 to 10 for purifying contaminated water to at least 6 log bacteria removal, 4 log virus removal and 3 log cyst removal.

## Patentansprüche

1. Feste Desinfektionszusammensetzung,
die Folgendes aufweist:
(i) ein oxidierendes Biozid und
(ii) einen Biozid-Quencher, der eine feste Matrix ist, die ein Reduktionsmittel aufweist, das in einem im Wesentlichen wasserunlöslichen Material eingeschlossen ist, das aus Oxid, Hydroxid, Oxohydroxid oder Carbonat eines Metalls ausgewählt ist, wobei das im Wesentlichen wasserunlösliche Material eine Wasserlöslichkeit bei 26 °C bei weniger als 1 g/l aufweist und wobei das Reduktionsmittel aus der Gruppe ausgewählt ist, die aus organischen C₂- C₁₂-Säuren und Salzen davon und einem oder mehreren anorganischen Salzen besteht, die aus Sulfiten, Bisulfiten, Metabisulfiten und Thiosulfaten ausgewählt sind.

2. Feste Desinfektionszusammensetzung nach Anspruch 1,
die 5 bis 50 % oxidierendes Biozid, 5 bis 50 % Reduktionsmittel und 15 bis 90 % im Wesentlichen wasserunlösliches Material aufweist, und zwar auf das Gewicht der festen Desinfektionszusammensetzung bezogen.

3. Feste Desinfektionszusammensetzung nach Anspruch 1,
wobei das Metall Calcium, Zink, Magnesium oder Aluminium ist.

4. Feste Desinfektionszusammensetzung nach einem der vorstehenden Ansprüche,
wobei das Reduktionsmittel ein Alkalimetallascorbat oder -thiosulfat ist.

5. Feste Desinfektionszusammensetzung nach einem der vorstehenden Ansprüche,
wobei das oxidierende Biozid eine Halogenverbindung ist.

6. Feste Desinfektionszusammensetzung nach einem der vorstehenden Ansprüche,
wobei das Gewichtverhältnis zwischen dem Reduktionsmittel und dem im Wesentlichen wasserunlöslichen Material im Bereich von 1:0,5 bis 1:20 liegt.

7. Feste Desinfektionszusammensetzung nach einem der vorstehenden Ansprüche,
wobei der Biozid-Quencher nach einem Verfahren hergestellt ist, das die folgenden Schritte aufweist:
(i) Mischen des Reduktionsmittels mit dem im Wesentlichen wasserunlöslichen Material in Gegenwart von Wasser, um eine Paste zu erzeugen, und (ii) Trocknen der Paste.

8. Feste Desinfektionszusammensetzung nach Anspruch 7,
wobei das Gewichtsverhältnis zwischen dem Reduktionsmittel und Wasser im Bereich von 1:0,5 bis 1:5 liegt.

9. Wasserreinigungszusammensetzung,
die ein Koagulationsmittel, das ein wasserlösliches anorganisches Metallsalz mit einem dreiwertigen Kation ist, ein wasserlösliches polymeres Flockungsmittel mit hohem Molekulargewicht und eine feste Desinfektionszusammensetzung nach einem der vorstehenden Ansprüche aufweist.

10. Wasserreinigungszusammensetzung nach Anspruch 9,
die zwei Portionen aufweist, die räumlich getrennt sind, wobei die erste Portion das oxidierende Biozid aufweist und die zweite Portion den Biozid-Quencher aufweist.

11. Verfahren zum Reinigen von verunreinigtem Wasser,
das die folgenden Schritte aufweist:
(i) Inkontaktbringen von verunreinigtem Wasser mit einer Zusammensetzung nach einem der vorstehenden Ansprüche und (ii) Abtrennen des unlöslichen Materials vom Wasser.

12. Verwendung einer Zusammensetzung nach einem der vorstehenden Ansprüche, 1 bis 10 zum Reinigen von verunreinigtem Wasser bis zu einer Bakterienentfernung von mindestens 6 log, einer Virusentfernung von 4 log und einer Zystenentfernung von 3 log.

## Revendications

1. Composition de désinfection solide comprenant
(i) un biocide oxydant et
(ii) un extincteur de biocide qui est une matrice solide comprenant un agent réducteur piégé dans une matière pratiquement insoluble dans l'eau choisie parmi un oxyde, un hydroxyde, un oxo-hydroxyde ou un carbonate d'un métal, où ladite matière pratiquement insoluble dans l'eau présente une solubilité dans l'eau inférieure à 1 gramme par litre à 25°C, et où l'agent réducteur est choisi dans le groupe constitué d'acides en C₂-C₁₂ et de sels organiques de ceux-ci, et un ou plusieurs sels inorganiques choisis parmi des sulfites, bisulfites, métabisulfites et thiosulfates.

2. Composition de désinfection solide selon la revendication 1 comprenant 5-50 % de biocide oxydant, 5-50 % d'agent réducteur et 15-90 % de matière pratiquement insoluble dans l'eau en masse de la composition de désinfection solide.

3. Composition de désinfection solide selon la revendication 1, dans laquelle ledit métal est le calcium, le zinc, le magnésium et l'aluminium.

4. Composition de désinfection solide selon l'une quelconque des revendications précédentes, dans laquelle l'agent réducteur est un ascorbate ou thiosulfate de métal alcalin.

5. Composition de désinfection solide selon l'une quelconque des revendications précédentes, dans laquelle le biocide oxydant est un composé d'halogène.

6. Composition de désinfection solide selon l'une quelconque des revendications précédentes, dans laquelle le rapport massique de l'agent réducteur à la matière pratiquement insoluble dans l'eau se trouve dans l'intervalle de 1:0,5 à 1:20.

7. Composition de désinfection solide selon l'une quelconque des revendications précédentes, dans laquelle l'extincteur de biocide est préparé par un procédé comprenant les étapes de (i) mélange de l'agent réducteur avec la matière pratiquement insoluble dans l'eau en présence d'eau pour former une pâte et (ii) séchage de ladite pâte.

8. Composition de désinfection solide selon la revendication 7, dans laquelle le rapport massique de l'agent réducteur à l'eau se trouve dans l'intervalle de 1:0,5 à 1:5.

9. Composition de purification d'eau comprenant un agent coagulant qui est un sel de métal inorganique soluble dans l'eau présentant un cation trivalent, un agent floculant polymère soluble dans l'eau de masse moléculaire élevée, et une composition de désinfection solide selon l'une quelconque des revendications précédentes.

10. Composition de purification d'eau selon la revendication 9 comprenant deux portions qui sont spatialement séparées, dans laquelle la première portion comprend le biocide oxydant et la seconde portion comprend l'extincteur de biocide.

11. Procédé de purification d'eau polluée comprenant les étapes de (i) mise en contact d'eau polluée avec une composition selon l'une quelconque des revendications précédentes et (ii) séparation de la matière insoluble de l'eau.

12. Utilisation d'une composition selon l'une quelconque des revendications 1 à 10 précédentes pour purifier de l'eau polluée jusqu'au moins 6 log pour l'élimination de bactéries, 4 log pour l'élimination de virus et 3 log pour l'élimination de kystes.
